# EUROPEAN PATENT APPLICATION

(11) **EP 4 776 647 A1**
(43) Date of publication of application: **15.07.2026**
(21) Application number: 25221517.3
(22) Date of filing: 08.12.2025
(51) Int. Cl.: H04Q 1/06, H05K 7/14

(54) **DEVICE BRACKET FOR SUPPORTING AND CARRYING A DATA COMMUNICATION DEVICE**

(30) Priority: 12.12.2024 DE 102024137440
(71) Applicant: Eaton Intelligent Power Limited, D04 Y0C2 Dublin 4 (IE)
(72) Inventor: Leitner, Jürgen, 3962 Unterlembach (AT); Bliemel, Christoph, 3942 Hirschbach (AT); Altrichter, Andreas, 3830 Waldhofen/Thaya (AT)
(74) Representative: Epping - Hermann - Fischer

(57) **Abstract**

A device bracket (1) for supporting and carrying a data communication device comprises a frame (100) being formed to provide a support for supporting and carrying the data communication device. The frame (100) has a structure (200) for providing cable management for a cable

## Description

### Technical Field

The disclosure relates to a device bracket for supporting and carrying a data communication device, for example, a router, a modem, a hub, a multi switch or similar.

### Background

Electrical data communication devices, such as routers, modems, hubs, multi switches or similar are built into multimedia distribution enclosures/cabinets to distribute incoming communication signals to end devices or forward them to the end devices after signal processing. Therefore, a multimedia distribution enclosure/cabinet contains a lot of different incoming and outgoing cables that are connected to the electrical data communication devices. This includes, for example, network cables, cables for transferring signals for cable/satellite TV as well as power supply cables for providing power supply to the electrical data communication devices arranged in the multimedia distribution enclosure/cabinet.

The various cables are usually located loosely and unsorted in the multimedia distribution enclosure. Due to the fact that no front cover is mounted to the multimedia distribution enclosure, the cables are always visible if the door of the enclosure/cabinet is opened. Apart from the fact that the multimedia distribution enclosure looks untidy inside, the distribution of the individual cables to the input and output ports of the communication devices is often difficult, because the cables can become entangled and thus interfere with each other. It is ultimately left to the skill of a technician to manually organize the cables and group them together advantageously and place them within a distribution enclosure/cabinet.

It would be welcome in the art to provide a simple but effective way to manage cables within a multimedia distribution enclosure/cabinet, in order to eliminate the cable clutter and organize the cables without the need for extensive constructive changes to the multimedia distribution enclosure/cabinet.

### Summary

To solve this challenge, a device bracket for supporting and carrying a data communication device that can be placed into a multimedia distribution enclosure/cabinet and enables additionally a simple but effective way of managing cables inside the multimedia distribution enclosure/cabinet without having to modify the distribution enclosure/cabinet itself, is specified in claim 1.

According to an embodiment of the device bracket for supporting and carrying a data communication device, the device bracket comprises a frame being formed to provide a support for supporting and carrying the data communication device. The frame has a structure for providing cable management for a cable.

The device bracket comprises a support for placing the device bracket in a signal or multimedia distribution enclosure/cabinet. The structure allows for cable management without the need for providing additional components, in particular, when the device bracket is mounted in a signal or multimedia distribution enclosure/cabinet. For example, if the device bracket is placed in a multimedia distribution cabinet/enclosure, no additional cable holders need to be installed in the cabinet/enclosure itself to allow for cable management. With the help of the proposed device bracket, cables that would otherwise be loose and tangled in the cabinet/enclosure can be arranged and stored in the cabinet/enclosure in an orderly fashion. The structure may be configured for providing cable management for a cable to be connected to the data communication device or for other cables which are included in the cabinet/enclosure.

According to a possible embodiment of the device bracket, the structure is formed to fix the cable at the frame of the device bracket. The frame is formed to hold a data communication device, for example a modem, a router, a hub, a multi switch, etc., which has to be connected to communication cables for transferring data signals to/from the data communication device and power/voltage cables to supply a supply current or voltage for the data communication device. By providing the proposed structure that is used for cable management directly on the frame of the device bracket, cables that need to be connected to the data communication device can be arranged in the close vicinity of the data communication device. Cables that have an excess length can thus be arranged directly at their point of use.

According to a possible embodiment of the device bracket, the frame is in one piece and the structure is part of the frame. This means that the structure is connected to the frame in one piece. Since the structure and the frame are designed as one part, it is not necessary to mount a holder that is specially configured for cable management on the frame. The effort required to manufacture the device bracket can thus be significantly simplified. For example, the frame can be made of plastic. The structure can then be easily produced by an appropriate preforming or molding of the plastic frame.

According to a possible embodiment of the device bracket, the structure for providing cable management can be formed as at least one hook-shaped element for holding the cable. The hook-shaped element provides a simple and secure way for attaching a cable to the device bracket. In particular, cables that are longer than necessary can be wound up and hung on the hook-shaped structure. This allows a cable to be arranged in an orderly fashion near a data communication device. Furthermore, as the cable can be simply hung on the hook-shaped structure, the cable can be easily removed again if it needs to be replaced or if cables need to be rearranged.

According to a possible embodiment of the device bracket, the at least one hook-shaped element has a first end that is integrally connected to the frame and a second end that is spaced apart from the frame. In particular, the hook-shaped element can be shaped to extend in a curved shape between its first and second end. Due to the curved shape, a previously wound cable can be easily attached to the supporting structure. Moreover, due to the curved shape of the structure for cable management, cables with excess length can be safely hung on the hook-shaped element without risk of the wound cables slipping off the hook-shaped element.

According to a possible embodiment of the device bracket, several hook-shaped elements can be provided on the frame of the device bracket to hold one cable or several different cables. For example, two hook-shaped elements for cable management can be arranged next to each other on the frame of the device bracket. In particular, the two hook-shaped elements can be arranged at the same height on the frame. This enables, for example, a wound cable with a large winding diameter to be attached to both hook-shaped elements, and thus to be securely fixed on the frame of the device bracket.

According to a possible embodiment of the device bracket for supporting and carrying a data communication device, the structure for providing cable management may comprise a recess that is arranged in the frame. The recess may be formed to attach a cable fastener, for example a tie rip, for fixing the cable at the frame.

A recess in the frame material is a simple but effective structure that can be used for cable management. The recess can be configured as a hole in the frame to which the cable fastener can be attached. The cable itself is held on the cable fastener and is thus also fixed to the frame of the device bracket. To detach the cable from the frame of the device bracket, the cable fastener can be cut.

According to another possible embodiment of the device bracket, the structure may comprise a cavity being formed in the frame of the device bracket. The cavity has a bottom surface and an opening area arranged above the bottom surface. The structure may further comprise a material web that extends through the opening area of the cavity. The material web may be integrally connected to the frame on both sides.

The material web serves as the actual holding element for attaching a cable fastener. The cable fastener is arranged around the material web and runs between the material web and the underside or bottom surface of the cavity. The distance between the bottom surface of the cavity and the material web has to be configured to attach the cable fastener at the material web. In this proposed embodiment of the device bracket, there is no need to provide structures for cable management protruding from the frame to fix a cable to the device bracket.

According to an embodiment of the device bracket for supporting and carrying a data communication device, the bottom surface of the cavity may have a curved shape. This makes it particularly easy to attach a cable fastener to the material web. Due to the curved bottom surface of the cavity, the cable fastener does not get stuck in the cavity when it is attached to the material web. Instead, the cable fastener is guided around the material web due to the curved shape of the bottom surface of the cavity.

Additional features and advantages are set forth in the detailed description that follows. It is to be understood that both the foregoing general description and the following detailed description are merely exemplary, and are intended to provide an overview or framework for understanding the nature and character of the claims.

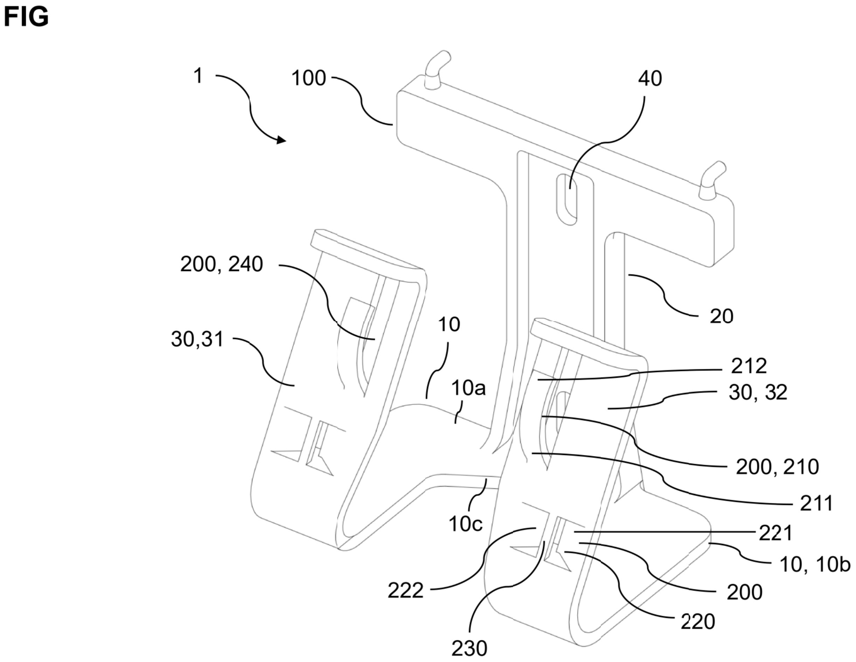

### Brief Description of the Drawing

The accompanying figure is included to provide further understanding, and is incorporated in, and constitute a part of the specification. As such, the proposed configuration of a device bracket for supporting and carrying a data communication device will be more fully understood from the following detailed description, taken in conjunction with the accompanying figure which shows a perspective view of a device bracket for supporting and carrying a data communication device having a structure for providing cable management.

### Detailed Description

A device bracket 1 for supporting and carrying a data communication device, for example a router, a modem, a hub, a multi switch, etc. is illustrated and explained in the following with reference to the figure. The device bracket 1 comprises a frame 100 which is formed to provide a support for supporting and carrying the data communication device. The frame comprises a foot part 10 having a standing surface 10a and a standing surface 10b being integrally connected to each other by a material bridge 10c. A rear support 20 extends from the material bridge 10c, forming a contact surface for holding the data communication device to be supported by the device bracket 1.

To hold the data communication device, the device bracket 1 further comprises a material bow 30 that is integrally connected to the foot part 10. The material bow 30 comprises a first bow part 31 being integrally connected to the standing surface 10a of the foot part 10, and a second bow part 32 being integrally connected to the standing surface 10b of the foot part 10. The two bow parts 31, 32 are inclined towards the rear support 20 so that a data communication device can be held between the rear support 20 and the front bow parts 31, 32.

The device bracket 1 comprises a support for placing or arranging the device bracket in a signal or multimedia distribution enclosure/cabinet. The support can be configured as the standing surfaces 10a and 10b of the foot part, which can serve as a stand of the device bracket inside the enclosure/cabinet. According to another embodiment, the support for placing or arranging the device bracket in the signal or multimedia distribution enclosure/cabinet can be configured as a mounting hole 40 which may be contained in the rear support 40. The mounting hole 40 enables the device bracket to be hung on a wall, for example an inner wall of the signal or multimedia distribution cabinet/enclosure. Further configurations for the support for placing or arranging the device bracket in a signal or multimedia distribution enclosure/cabinet are possible.

It should be noted that the figure shows only one possible embodiment for the frame 10 of the device bracket 1 for supporting a data communication device, but the device bracket is not limited to this particular frame design.

According to the proposed approach for a device bracket 1 for supporting and carrying a data communication device, the frame 100 has a structure 200 for providing cable management for a cable, for example a cable to be connected to the data communication device supported by the device bracket 1. Typically, a data communication device supported by the device bracket 1 is connected to several different cables, such as data cables or power supply cables. According to the proposed approach, the structure 200 for cable management can be used to avoid cable clutter of the cables to be connected to the data communication device.

In particular, when the device bracket 1 is placed in a signal or multimedia distribution enclosure/cabinet, the cables located in the enclosure/cabinet can be sorted and properly placed close to the data communication device to which they are to be connected by fixing the cables to the structure 200 of the frame 100. The structure 200 may further be configured to provide a cable management for other cables which are included in the enclosure/cabinet. For the cable management, it is therefore not necessary to provide a signal or multimedia distribution enclosure/cabinet with holders that are specifically designed for cable management and that would require a significant amount of space within the enclosure/cabinet.

According to a possible embodiment of the proposed approach of the device bracket 1, the frame 100 is in one piece, and the structure 200 is part of the frame 100. The frame can be made of a plastic material, and the structure for cable management can be a molded part of the frame. The frame 100 can therefore be easily manufactured. In particular, it is not necessary to mount separate parts for holding cables to provide the cable management on the frame. The structure 200 for providing cable management is rather an integral part of the frame 100, and therefore requires only a small amount of space.

In the following, various possible embodiments of the structure 200 to provide a cable management are explained based on the figure. In all of the embodiments of the structure 200 for providing cable management, the structure 200 is formed to fix a cable or several cables at the frame 100.

According to a possible embodiment of the device bracket 1, the structure 200 is formed as at least one hook-shaped element 210 for holding a cable. The hook-shaped element 210 is particularly configured to hold the cable in coiled form. The at least one hook-shaped element 210 is integrally connected to the frame 200. As shown in the Figure, the at least one hook-shaped element 210 has a first end 211 that is integrally connected to the frame 100 and a second end 212 that is spaced apart from the frame 100. The hook-shaped element 210 may be shaped to extend in a curved shape between the first end 211 and the second end 212. The hook-shaped element 210 may be designed as a material rib that can, for example, protrude in a curved shape from the frame 100. Due to the curved shape of the hook-shaped element 210, a large number of cable coils can be attached to the hook-shaped element.

In principle, one or more hook-shaped elements 210, for example two hook-shaped elements 210, can be provided for cable management. In the illustrated embodiment of the figure, hook-shaped elements 210 are arranged in an upper area of the two bow parts 31 and 32. The curved structures 210 protruding from the bow parts 31 and 32 allow a cable to be hung in coiled form on the hook-shaped elements 210 and thus to be fixed to the frame 100.

The hook-shaped elements 210 shown in the figure allow for various types of cable management. For example, a cable can be hung in a coiled form on each of the hook-shaped elements 210. It is also possible to use both hook-shaped elements 210 to attach just one cable to the frame. For example, a large cable loop of one cable can be formed and hooked into both hook-shaped elements 210. A cable fastener can be placed in the center of the loop so that two smaller cable loops are then formed around both hook-shaped elements 210.

According to another possible embodiment of the device bracket 1, the structure 200 for cable management may comprise a cavity 220 formed in the frame 100. The cavity 220 has a bottom surface 221 and an opening area 222 arranged above the bottom surface 221. The structure 200 for cable management further comprises a material web 230 that extends through the opening area 222 of the cavity 220. As illustrated in the figure, the material web 230 may extend from one side of the opening area 222 to the opposite side of the opening area 222, and thus divides the opening area 222 into a first region and a second region. The material web 230 can be integrally connected to the frame 100.

As illustrated in the figure, the structure 200 for cable management comprising the cavity 220 and the material web 230 may be an integral part of the frame 100. In particular, a cavity 220 and a material web 230 may be arranged in each of the bow parts 31 and 32 of the material bow 30. The respective cavity 220 and the respective material web 230 may be arranged in a bottom part of each of the bow parts 31 and 32. If the structure 200 for cable management comprises both the first embodiment of the structure 200 being configured as the hook-shaped elements 210 and the second embodiment of the structure 200 including the cavity 220 and the material web 230, the arrangements of the cavity 220 and the material web 230 may be arranged below the hook-shaped elements 210. With reference to the second embodiment of the structure 200 for providing cable management comprising the cavity 220 and the material web 230, a cable can be attached to the frame 100 by means of a cable fastener, for example a tie rip. The cable fastener is attached to the material web 230 with the cable bound together by the cable fastener. The cable fastener runs in a space between the bottom surface 221 of the cavity 220 and the material web 230. To make this possible, the distance between the bottom surface 221 of the cavity 220 and the material web 230 is configured to attach the cable fastener at the material web 230.

According to an advantageous configuration of the second embodiment of the structure 200 for cable management, the bottom surface 221 of the cavity 220 may have a curved shape. Due to the curved shape of the bottom surface 221, a cable fastener can be easily arranged around the material web 230 because the curved shape of the bottom surface 221 of the cavity 220 provides a guide for threading the cable fastener around the material web 230.

Using the second embodiment of the structure 200 for providing the cable management, there are various options for attaching a cable to the frame 100 of the device bracket 1. For example, a cable fastener with a cable can be attached to each of the material webs 230 of the bow parts 31 and 32. Furthermore, it is possible to wind a cable into a large loop and to attach the cable loop to both material webs 230 of the bow parts 31 and 32 using two cable fasteners.

Finally, the frame 100 may comprise the first embodiment and the second embodiment of the structure 200 for cable management, as illustrated in the figure. In this case, for example, a cable can be wound into a large loop, with the loop being attached to each of the material webs 230 of the bow parts 31 and 32 and the loop additionally being hooked into the hook-shaped elements 210 of each of the bow parts 31 and 32.

According to another embodiment of a structure 200 for cable management, the structure 200 comprises a recess 240 being arranged in the frame 100. The recess 240 may be configured as a hole arranged in the material of the frame 100. For example, a respective hole may be arranged in each of the bow parts 31 and 32 of the material bow 30. The recess 240 is formed to attach a cable fastener for fixing the cable at the frame 100.

The embodiments of the proposed device bracket for supporting and carrying a data communication device disclosed herein have been discussed for the purpose of familiarizing the reader with novel aspects of the device bracket. Although preferred embodiments have been shown and described, many changes, modifications, equivalents and substitutions of the disclosed concept may be made by one having skill in the art without unnecessarily departing from the scope of the claims.

In particular, the design of the proposed device bracket is not limited to the disclosed embodiments, and gives examples of many alternatives as possible for the features included in the embodiments discussed.

Furthermore, features recited in separate dependent claims may be advantageously combined. Moreover, reference signs used in the claims are not limited to be construed as limiting the scope of the claims.

Moreover, as used herein, the term "comprising" does not exclude other elements. In addition, as used herein, the article "a" is intended to include one or more than one component or element, and is not limited to be construed as meaning only one.

### List of reference signs

- 1: device bracket
- 10: foot part
- 10a, 10b: standing surface
- 10c: material bridge
- 20: rear support
- 30: material bow
- 31, 32: bow part
- 40: mounting hole
- 100: frame
- 200: structure for cable management
- 210: hook-shaped element
- 211, 212: end of hook-shaped element
- 220: cavity
- 221: bottom surface of cavity
- 222: opening area
- 230: material web
- 240: recess

## Claims

1. Device bracket for supporting and carrying a data communication device, comprising:
- a frame (100) being formed to provide a support for supporting and carrying the data communication device,
- wherein the frame (100) has a structure (200) for providing cable management for a cable.

2. The device bracket of claim 1,
wherein the structure (200) is formed to fix the cable at the frame (100).

3. The device bracket of claim 1 or 2,
wherein the frame (100) is in one piece and the structure (200) is part of the frame (100).

4. The device bracket of any of the claims 1 to 3,
wherein the structure (200) is formed as at least one hook-shaped element (210) for holding the cable.

5. The device bracket of claim 4,
wherein the at least one hook-shaped element (210) is integrally connected to the frame (200).

6. The device bracket of claim 4 or 5,
wherein the at least one hook-shaped element (210) has a first end (211) that is integrally connected to the frame (100) and a second end (212) that is spaced apart from the frame (100).

7. The device bracket of claim 6,
wherein the hook-shaped element (210) is shaped to extend in a curved shape between the first end (211) and the second end (212).

8. The device bracket of any of the claims 1 to 7
- wherein the structure (200) comprises a cavity (220) being formed in the frame (100),
- wherein the cavity (220) has a bottom surface (221) and an opening area (222) arranged above the bottom surface (221),
- wherein the structure (200) comprises a material web (230) that extends through the opening area (222) of the cavity.

9. The device bracket of claim 8,
wherein the distance between the bottom surface (221) of the cavity (220) and the material web (230) is configured to attach a cable fastener at the material web (230).

10. The device bracket of claim 8 or 9,
wherein the bottom surface (221) of the cavity (220) has a curved shape.

11. The device bracket of any of the claims 1 to 10,
wherein the structure (200) comprises a recess (240) being arranged in the frame (100).

12. The device bracket of claim 11,
wherein the recess (240) is formed to attach a cable fastener for fixing the cable at the frame (100).
